# EUROPEAN PATENT APPLICATION

(11) **EP 4 782 961 A1**
(43) Date of publication of application: **29.07.2026**
(21) Application number: 24878978.6
(22) Date of filing: 15.10.2024
(51) Int. Cl.: G06F 1/20, F28D 1/03

(54) **HEAT EXCHANGER, HEAT DISSIPATION MODULE, AND COMPUTING DEVICE**

(30) Priority: 17.10.2023 CN 202322796568 U
(71) Applicant: HUAWEI TECHNOLOGIES CO., LTD., Shenzhen 518129 (CN)
(72) Inventor: TANG, Yinzhong, Shenzhen, Guangdong 518129 (CN); BAI, Ke, Shenzhen, Guangdong 518129 (CN); LIU, Yu, Shenzhen, Guangdong 518129 (CN)
(74) Representative: Körber, Martin Hans
(86) International application number: PCT/CN2024/124845
(87) International publication number: WO 2025/082335

(57) **Abstract**

Embodiments of this application provide a heat exchanger, a heat dissipation module, and a compute device. The heat exchanger includes a first housing, a second housing, and a main body portion. The first housing and the second housing are fastened to two end portions of the main body portion. The first housing has at least two independent chambers, the second housing has at least one independent cavity, and the main body portion includes at least two flow channel portions. An inlet of the heat exchanger communicates with one chamber, an outlet of the heat exchanger communicates with another chamber or the cavity, and the flow channel portion communicates with one of the at least two chambers and one of the at least one cavity, so that a heat exchange medium flowing in through the inlet is able to sequentially flow through the flow channel portions and then flow out from the outlet. A stroke of the heat exchange medium in the heat exchanger is increased through optimization of a structure of the heat exchanger, so that heat exchange of the heat exchange medium is sufficient, to improve heat exchange efficiency of the heat exchanger.

## Description

This application claims priority to Chinese Patent Application No. 202322796568.6, filed with the China National Intellectual Property Administration on October 17, 2023 and entitled "HEAT EXCHANGER, HEAT DISSIPATION MODULE, AND COMPUTE DEVICE", which is incorporated herein by reference in its entirety.

### TECHNICAL FIELD

Embodiments of this application relate to the server field, and in particular, to a heat exchanger, a heat dissipation module, and a compute device.

### BACKGROUND

As computational power of compute devices increases, power consumption of electronic components such as chips of the compute devices continuously increases. As a result, air cooling heat dissipation cannot meet heat dissipation requirements of the compute devices, and liquid cooling heat dissipation becomes a development trend of heat dissipation of the compute devices.

In a liquid cooling heat dissipation solution, a pump is used to drive a liquid cooling working medium to enter a cooling plate, the liquid cooling working medium performs heat exchange with a heat generation component such as a chip in the cooling plate, the liquid cooling working medium that absorbs heat enters a heat exchanger after flowing out of the cooling plate, the heat exchanger performs heat exchange with fan airflow to reduce a temperature of the liquid cooling working medium, and the cooled liquid cooling working medium enters the cooling plate again through driving of the pump. This is cyclically performed to implement continuous heat dissipation for the heat generation component such as the chip. In the related technology, a heat exchange stroke of the heat exchanger is short, and heat exchange of the liquid cooling working medium is insufficient, affecting subsequent heat dissipation effect for the heat generation component such as the chip.

### SUMMARY

Embodiments of this application provide a heat exchanger, a heat dissipation module, and a compute device, so that heat exchange efficiency of the heat exchanger can be improved through optimization of a structure of the heat exchanger, to support heat dissipation configurations of a heat generation component in different application scenarios.

A first aspect of embodiments of this application provides a heat exchanger. The heat exchanger includes a first housing, a second housing, and a main body portion. The first housing and the second housing are fastened to two end portions of the main body portion. The first housing has at least two independent chambers, the second housing has at least one independent cavity, and the main body portion includes at least two flow channel portions. An inlet of the heat exchanger communicates with one chamber, an outlet of the heat exchanger communicates with another chamber or the cavity, and the flow channel portion communicates with one of the at least two chambers and one of the at least one cavity, so that a heat exchange medium flowing in through the inlet is able to sequentially flow through the flow channel portions and then flow out from the outlet. In this way, after the heat exchange medium flows in from the inlet of the heat exchanger, the heat exchange medium sequentially flows through each flow channel portion and then flows out from the outlet of the heat exchanger, so that a stroke of the heat exchange medium in the heat exchanger is increased, a heat exchange area of the heat exchange medium is increased, balance of temperatures at two ends of the heat exchanger is good, and heat exchange of the heat exchange medium is sufficient, to improve heat exchange efficiency of the heat exchanger.

During actual application, high heat exchange efficiency of the heat exchanger improves the heat dissipation effect for the heat generation component in an application scenario.

During actual application, the heat exchange medium may be a liquid working medium or a gas-liquid two-phase working medium.

In a possible implementation, the first housing and the second housing each include a wall plate, a housing main body, and a cover plate, the housing main body is fastened between the wall plate and the cover plate, and the wall plate, the housing main body, and the cover plate enclose a housing cavity. The first housing further includes a first partition plate that divides a housing cavity of the first housing into at least two chambers. The second housing further includes a second partition plate that divides a housing cavity of the second housing into at least two cavities. Disposing of structures of the first housing and the second housing is simple.

During actual application, the first housing may be of an integrally formed structure, or may be of a split structure, that is, at least two parts of the wall plate, the housing main body, the cover plate, and the first partition plate are separately disposed, and then assembled together. The second housing may also be disposed in a similar manner.

For example, the first partition plate divides the housing cavity of the first housing into three first cavities, the second partition plate divides the housing cavity of the second housing into two second cavities, and the main body portion includes four flow channel portions. In this way, the heat exchange medium forms a double U-shaped flow channel in the heat exchanger, and the inlet and the outlet of the heat exchanger may be provided in a same side, to facilitate pipeline arrangement.

In a possible implementation, a first reinforcing structure is disposed inside the housing cavity of the first housing; and/or a second reinforcing structure is disposed inside the housing cavity of the second housing. In this way, structural strength of the first housing and/or the second housing can be improved, to meet requirements of different heat exchange media and improve applicability.

For example, the first reinforcing structure may include a first support column connected between the wall plate and the cover plate of the first housing. The first support column may be a cylinder, a square column, or a prism column. One or more first support columns may be disposed.

For example, the second reinforcing structure may include a second support column connected between the wall plate and the cover plate of the second housing. The second support column may be a cylinder, a square column, or a prism column. One or more second support columns may be disposed.

In a possible implementation, the flow channel portion includes a flat tube, the flat tube has a plurality of channels, and two ends of the flat tube are respectively fixedly inserted into the wall plate of the first housing and the wall plate of the second housing, so that the channel communicates with the chamber and the cavity. The flow channel portion adopts a flat tube form, which has good structural strength, and is beneficial to increasing heat exchange area and improving heat exchange efficiency.

In a possible implementation, the main body portion includes a plurality of flat tubes and a plurality of fins, in the plurality of flat tubes of the main body portion, at least some of the flat tubes are arranged in a first direction, and the fin is disposed between two adjacent flat tubes in the first direction. The arrangement manner of the flat tubes can reduce a size of the heat exchanger as much as possible. This facilitates arrangement in an application scenario with limited space. In addition, the fin is disposed between adjacent flat tubes, to increase a heat exchange area and improve heat exchange efficiency.

In a possible implementation, the main body portion further includes at least two plate bodies, a plurality of flat tubes arranged in the first direction are located between the two plate bodies, the fin is disposed between the plate body and a flat tube adjacent to the plate body, and two ends of the plate body are respectively fastened to the first housing and the second housing. In this way, structural stability of the main body portion can be improved, and a heat exchange capability of the heat exchange medium flowing in the flat tube adjacent to the plate body can also be improved.

In a possible implementation, in the plurality of flat tubes of the main body portion, at least some of the flat tubes are arranged in a second direction, the second direction is perpendicular to the first direction, and the fin is also disposed between two adjacent flat tubes in the second direction.

A second aspect of embodiments of this application further provides a heat dissipation module. The heat dissipation module includes a power component, a first heat exchange portion, and a second heat exchange portion, the first heat exchange portion is the heat exchanger provided in the first aspect, an inlet of the first heat exchange portion is connected to an outlet of the second heat exchange portion, an outlet of the first heat exchange portion is connected to an inlet of the second heat exchange portion, and the power component is disposed on a pipeline between the outlet of the first heat exchange portion and the inlet of the second heat exchange portion.

The heat dissipation module may be used in an application scenario in which there is a heat generation component, and has good heat dissipation effect for the heat generation component.

A third aspect of embodiments of this application further provides a compute device. The compute device includes a heat generation component and a heat dissipation module, the heat dissipation module is the heat dissipation module provided in the second aspect, and a second heat exchange portion of the heat dissipation module is configured to perform heat exchange with a first heat exchange portion.

For example, the compute device may be a compute node or a server, and the heat generation component may be a chip.

### BRIEF DESCRIPTION OF DRAWINGS

FIG. 1 is a main view of a heat exchanger according to an embodiment of this application;
FIG. 2 is a diagram of a structure of the heat exchanger shown in FIG. 1 in which a first cover plate is hidden;
FIG. 3 is a partially enlarged view of a region that is of the heat exchanger shown in FIG. 2 and that is close to a first housing;
FIG. 4 is a diagram of a right end face of the heat exchanger shown in FIG. 2;
FIG. 5 is a diagram of a structure of the heat exchanger shown in FIG. 1 in which a second cover plate is hidden;
FIG. 6 is a partially enlarged view of a region that is of the heat exchanger shown in FIG. 5 and that is close to a second housing;
FIG. 7 is a diagram of a left end face of the heat exchanger shown in FIG. 5;
FIG. 8 is a three-dimensional sectional view of a main body portion of the heat exchanger shown in FIG. 1;
FIG. 9 is a diagram of a flow principle of a heat exchange medium in the heat exchanger shown in FIG. 1; and
FIG. 10 is a diagram of a structure of a heat dissipation module according to an embodiment of this application.

### DESCRIPTION OF EMBODIMENTS

Embodiments of this application provide a heat exchanger, so that a stroke of a heat exchange medium in the heat exchanger can be increased through optimization of a structure, and a heat exchange area is greatly increased, to improve heat exchange efficiency of the heat exchanger.

The heat exchanger provided in embodiments of this application includes a first housing, a second housing, and a main body portion. The first housing and the second housing are fastened to two end portions of the main body portion. The first housing has at least two independent chambers, the second housing has at least one independent cavity, and the main body portion includes at least two flow channel portions. The heat exchanger further has an inlet and an outlet, the inlet communicates with one chamber of the first housing, the outlet may communicate with another chamber of the first housing or may communicate with one cavity of the second housing, and the flow channel portion communicates with one of the at least two chambers or one of the at least one cavity, so that the heat exchange medium flowing in through the inlet is able to sequentially flow through the flow channel portions and then flow out from the outlet. In other words, a connection relationship between the inlet, the outlet, each chamber, each cavity, and the flow channel portion of the heat exchanger is set as follows: The flow channel portions of the main body portion are connected in series between the inlet and the outlet of the heat exchanger, where the chamber or the cavity is configured to introduce or discharge the heat exchange medium, or is configured to communicate with two adjacent flow channel portions.

In this way, during application of the heat exchanger, after the heat exchange medium enters the heat exchanger from the inlet, the heat exchange medium sequentially flows through all the flow channel portions of the main body portion before flowing out from the outlet, so that a stroke of the heat exchange medium in the heat exchanger is increased, a heat exchange area of the heat exchange medium is greatly increased, balance of temperatures at two ends of the heat exchanger is good, and heat exchange of the heat exchange medium is sufficient, to improve heat exchange efficiency of the heat exchanger.

That the chambers of the first housing are independent means that the chambers do not directly communicate with each other. The second housing may be provided with only one cavity, or may be provided with two or more cavities. When the second housing is provided with two or more cavities, that the cavities are independent also means that the cavities do not directly communicate with each other.

A quantity of chambers of the first housing and a quantity of cavities of the second housing are related to a quantity of flow channel portions of the main body portion, and there may be a plurality of implementation solutions. To better understand the technical solutions and technical effects of this application, without loss of generality, the following describes in detail specific embodiments of the heat exchanger with reference to the accompanying drawings.

For ease of description and understanding, the following defines three directions for the heat exchanger: An x-axis direction is a length direction of the heat exchanger, and is also an extension direction of the main body portion of the heat exchanger; a y-axis direction is a width direction of the heat exchanger; and a z-axis direction is a height direction of the heat exchanger.

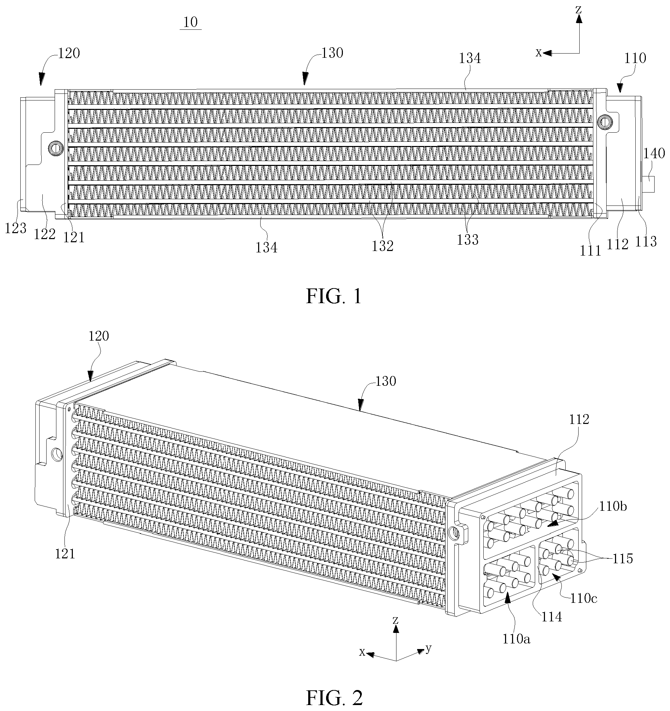

FIG. 1 is a main view of a heat exchanger according to an embodiment of this application.

As shown in FIG. 1, the heat exchanger 10 includes a first housing 110, a second housing 120, and a main body portion 130. The first housing 110, the main body portion 130, and the second housing 120 are arranged in the x-axis direction, and the main body portion 130 is fastened between the first housing 110 and the second housing 120. With reference to an orientation shown in FIG. 1, the first housing 110 is located on a right side of the main body portion 130, and the second housing 120 is located on a left side of the main body portion 130.

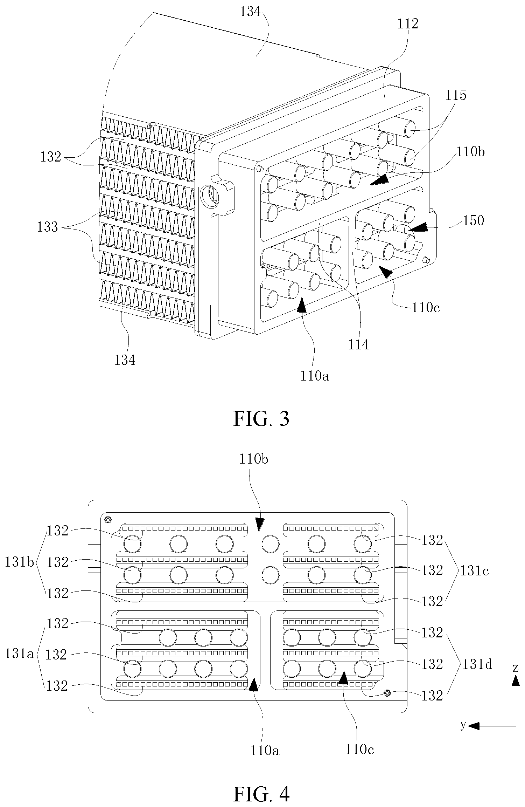

Refer to FIG. 2 to FIG. 4 together. FIG. 2 is a diagram of a structure of the heat exchanger shown in FIG. 1 in which a first cover plate is hidden. FIG. 3 is a partially enlarged view of a region that is of the heat exchanger shown in FIG. 2 and that is close to a first housing. FIG. 4 is a diagram of a right end face of the heat exchanger shown in FIG. 2. To clearly show an internal structure of the first housing, the first cover plate of the first housing is hidden in FIG. 2 and FIG. 4.

In this implementation solution, the first housing 110 includes a first wall plate 111, a first housing main body 112, and a first cover plate 113. The first wall plate 111 is configured to connect to a right end portion of the main body portion 130. The first housing main body 112 is fastened between the first wall plate 111 and the first cover plate 113. The first wall plate 111, the first housing main body 112, and the first cover plate 113 enclose a first housing cavity. The first housing 110 further includes a first partition plate 114. The first partition plate 114 divides the first housing cavity into three chambers, namely, a first chamber 110a, a second chamber 110b, and a third chamber 110c.

As shown in FIG. 2 to FIG. 4, the first partition plate 114 is in a T-shaped shape. Among the three chambers separated by the first housing cavity by the first partition plate 114, the first chamber 110a and the third chamber 110c are arranged in the y-axis direction. The second chamber 110b is located above the first chamber 110a and the third chamber 110c. In other words, the second chamber 110b and a chamber part that includes the first chamber 110a and the third chamber 110c are arranged in the z-axis direction.

The first partition plate 114 and the first housing main body 112 may be integrally formed, to simplify assembling and improve structural strength of the first housing 110. After the first housing main body 112, the first wall plate 111, and the first cover plate 113 are assembled, the first partition plate 114 should abut against the first wall plate 111 and the first cover plate 113, to ensure that the three separated chambers are independent of each other and avoid direct communication between the three chambers.

In a specific implementation, the first wall plate 111, the first housing main body 112, and the first cover plate 113 may be disposed separately, and then assembled and fastened together. This facilitates assembling the main body portion 130 and the first wall plate 111, and facilitates maintaining the first housing 110.

In another specific implementation, the first housing 110 may alternatively be of an integrally formed structure, or the first wall plate 111 and the first housing main body 112 may be integrally formed, or the first housing main body 112 and the first cover plate 113 may be integrally formed.

As shown in FIG. 1, in this implementation solution, a connector 140 is disposed on the first housing 110, and the connector 140 is connected to an inlet of the first housing 110. This facilitates connection of an external pipeline, to introduce a heat exchange medium into the first housing 110.

The inlet of the first housing 110 may be provided in the first cover plate 113, and the inlet communicates with the first chamber 110a. The connector 140 is installed at a position that is on the first cover plate 113 and that corresponds to the first chamber 110a. Disposing in this manner is simple.

In this implementation solution, an outlet 150 of the heat exchanger 10 is also provided in the first housing 110. As shown in FIG. 3, the outlet 150 is provided in a side wall of the first housing main body 112, and the outlet 150 communicates with the third chamber 110c. In another implementation solution, the outlet 150 may alternatively be provided in the first cover plate 113.

In this implementation solution, a first reinforcing structure is further disposed inside the first housing cavity of the first housing 110, to improve structural strength of the first housing 110 and avoid deformation of the first housing 110 caused by pressure impact of the heat exchange medium.

For example, the first reinforcing structure may include a first support column 115 connected between the first wall plate 111 and the first cover plate 113, and the first support column 115 is disposed in each of the first chamber 110a, the second chamber 110b, and the third chamber 110c. In the solutions shown in FIG. 2 to FIG. 4, the first support column 115 is of a cylindrical structure. In another implementation solution, the first support column 115 may alternatively be of a square column, a prism column, or the like. A quantity, shape, arrangement, and the like of first support columns 115 may be set based on an actual requirement, and are not limited to the solution shown in the figure.

The first reinforcing structure may alternatively be in another form, for example, a convex rib disposed on an inner wall surface of the first housing 110.

In another implementation solution, based on different heat exchange media, different application requirements, and the like, the first reinforcing structure may alternatively be not disposed in the first housing 110.

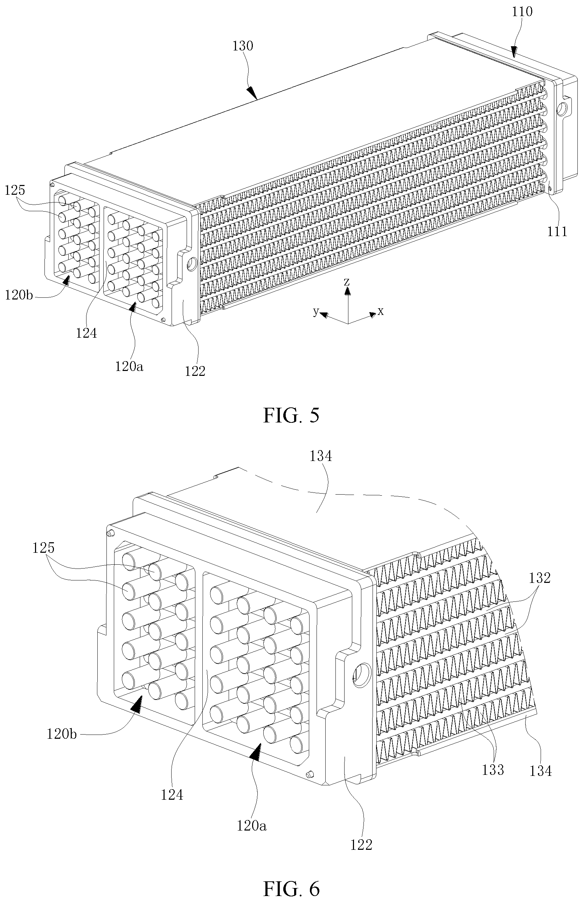

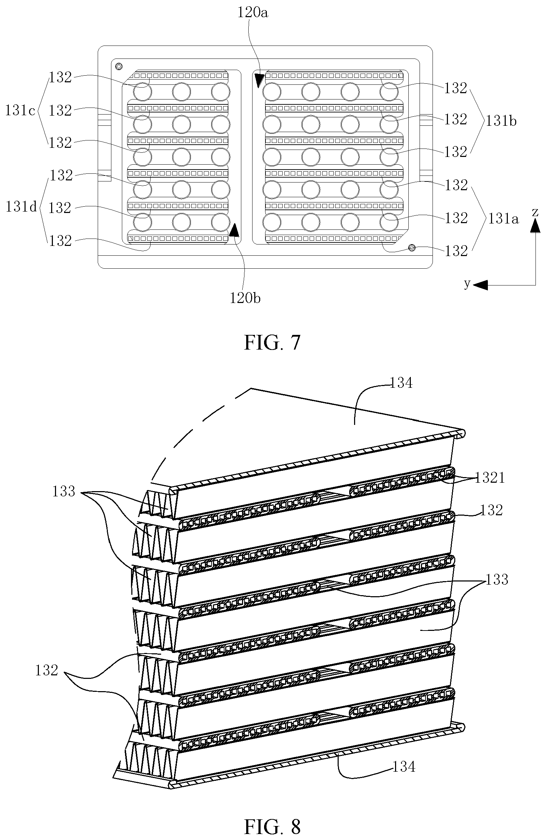

Refer to FIG. 5 to FIG. 7 together. FIG. 5 is a diagram of a structure of the heat exchanger shown in FIG. 1 in which a second cover plate is hidden. FIG. 6 is a partially enlarged view of a region that is of the heat exchanger shown in FIG. 5 and that is close to a second housing. FIG. 7 is a diagram of a left end face of the heat exchanger shown in FIG. 5.

In this implementation solution, main structural composition of the second housing 120 is similar to that of the first housing 110. The second housing 120 includes a second wall plate 121, a second housing main body 122, and a second cover plate 123. The second wall plate 121 is configured to connect to a left end portion of the main body portion 130. The second housing main body 122 is fastened between the second wall plate 121 and the second cover plate 123. The second wall plate 121, the second housing main body 122, and the second cover plate 123 enclose a second housing cavity. The second housing 120 further includes a second partition plate 124, the second partition plate 124 divides the second housing cavity into two cavities, namely, a first cavity 120a and a second cavity 120b.

As shown in FIG. 5 to FIG. 7, the second partition plate 124 extends in the z-axis direction, and the first cavity 120a and the second cavity 120b that are separated by the second partition plate 124 are arranged in the y-axis direction. In comparison with FIG. 2 to FIG. 4, an arrangement direction of the first cavity 120a and the second cavity 120b is consistent with an arrangement direction of the first chamber 110a and the third chamber 110c.

The second partition plate 124 and the second housing main body 122 may be integrally formed, to simplify assembling and improve structural strength of the second housing 120. After the second housing main body 122, the second wall plate 121, and the second cover plate 123 are assembled, the second partition plate 124 should abut against the second wall plate 121 and the second cover plate 123, to ensure that the two separated cavities are independent of each other and avoid direct communication between the two cavities.

In a specific implementation, the second wall plate 121, the second housing main body 122, and the second cover plate 123 may be disposed separately, and then assembled and fastened together. This facilitates assembling the main body portion 130 and the second wall plate 121, and facilitates maintaining the second housing 120.

In another specific implementation, the second housing 120 may alternatively be of an integrally formed structure, or the second wall plate 121 and the second housing main body 122 may be integrally formed, or the second housing main body 122 and the second cover plate 123 may be integrally formed.

In this implementation solution, a second reinforcing structure is further disposed inside the second housing cavity of the second housing 120, to improve structural strength of the second housing 120 and avoid deformation of the second housing 120 caused by pressure impact of the heat exchange medium.

For example, the second reinforcing structure may include a second support column 125 connected between the second wall plate 121 and the second cover plate 123, and the second support column 125 is disposed in both the first cavity 120a and the second cavity 120b. In the solutions shown in FIG. 5 to FIG. 7, the second support column 125 is of a cylindrical structure. In another implementation solution, the second support column 125 may alternatively be of a square column, a prism column, or the like. A quantity, shape, arrangement, and the like of second support columns 125 may be set based on an actual requirement, and are not limited to the solution shown in the figure.

The second reinforcing structure may alternatively be in another form, for example, a convex rib disposed on an inner wall surface of the second housing 120.

In another implementation solution, based on different heat exchange media, different application requirements, and the like, the first reinforcing structure may alternatively be not disposed in the second housing 120.

In this implementation solution, the main body portion 130 includes four flow channel portions, namely, a first flow channel portion 131a, a second flow channel portion 131b, a third flow channel portion 131c, and a fourth flow channel portion 131d as shown in FIG. 4 and FIG. 7. The first flow channel portion 131a communicates with the first chamber 110a of the first housing 110 and the first cavity 120a of the second housing 120, the second flow channel portion 131b communicates with the first cavity 120a of the second housing 120 and the second chamber 110b of the first housing 110, the third flow channel portion 131c communicates with the second chamber 110b of the first housing 110 and the second cavity 120b of the second housing 120, and the fourth flow channel portion 131d communicates with the second cavity 120b of the second housing 120 and the third chamber 110c of the first housing 110.

FIG. 8 is a three-dimensional sectional view of a main body portion of the heat exchanger shown in FIG. 1.

Each of the four flow channel portions of the main body portion 130 includes a flat tube 132, the flat tube 132 has a plurality of channels 1321, the channel 1321 extends in the x-axis direction, two ends of the flat tube 132 in the x-axis direction are respectively fixedly inserted into the first wall plate 111 of the first housing 110 and the second wall plate 121 of the second housing 120, and the channel 1321 of the flat tube 132 communicates with a corresponding chamber and a corresponding cavity.

With reference to the orientation shown in FIG. 1, a right end of the flat tube 132 of the first flow channel portion 131a communicates with the first chamber 110a, and a left end communicates with the first cavity 120a; a left end of the flat tube 132 of the second flow channel portion 131b communicates with the first cavity 120a, and a right end communicates with the second chamber 110b; a right end of the flat tube 132 of the third flow channel portion 131c communicates with the second chamber 110b, and a left end communicates with the second cavity 120b; and a left end of the flat tube 132 of the fourth flow channel portion 131d communicates with the second cavity 120b, and a right end communicates with the third chamber 110c.

The inlet of the heat exchanger 10 communicates with the first chamber 110a of the first housing 110, and the outlet 150 communicates with the third chamber 110c of the first housing 110.

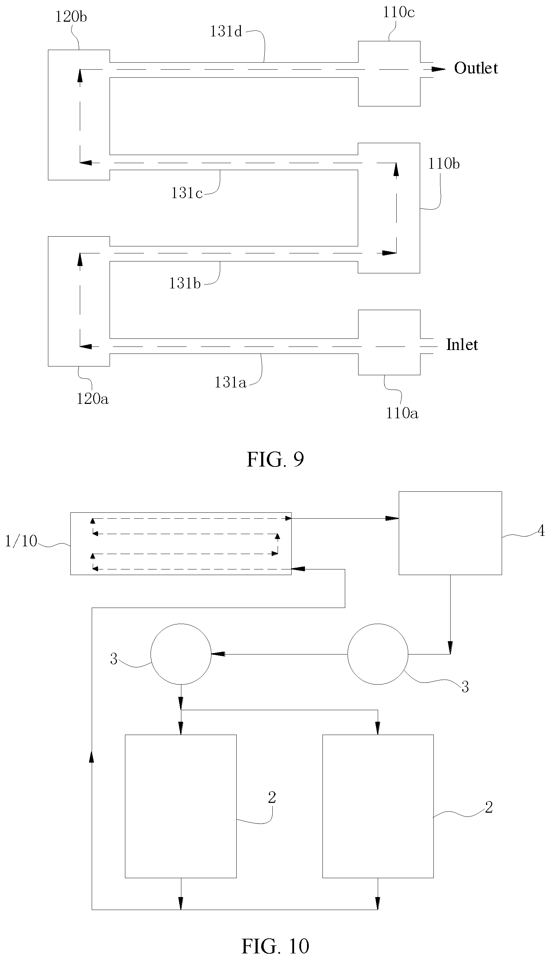

FIG. 9 is a diagram of a flow principle of a heat exchange medium in the heat exchanger shown in FIG. 1. A dashed line arrow in FIG. 9 shows a flow path of the heat exchange medium.

In this implementation solution, the flow path of the heat exchange medium in the heat exchanger 10 is as follows: The heat exchange medium flows into the first chamber 110a of the first housing 110 from the inlet, then flows into the first flow channel 131a that communicates with the first chamber 110a, flows out to the first cavity 120a of the second housing 120 through the first flow channel 131a, then flows into the second flow channel 131b that communicates with the first cavity 120a from the first cavity 120a, flows out to the second chamber 110b of the first housing 110 through the second flow channel 131b, then flows into the third flow channel 131c that communicates with the second chamber 110b from the second chamber 110b, flows out to the second cavity 120b of the second housing 120 through the third flow channel 131c, then flows into the fourth flow channel 131d that communicates with the second cavity 120b from the second cavity 120b, flows out to the third chamber 110c of the first housing 110 through the fourth flow channel 131d, and finally flows out from the outlet 150 that communicates with the third chamber 110c. In short, the flow path of the heat exchange medium is: the inlet → the first chamber 110a → the first flow channel 131a → the first cavity 120a → the second flow channel 131b → the second chamber 110b → the third flow channel 131c → the second cavity 120b → the fourth flow channel 131d → the third chamber 110c → the outlet 150.

It can be seen from the above that, according to the heat exchanger 10, the housing cavities of the first housing 110 and the second housing 120 of the heat exchanger 10 are divided into separate sections through the partition plates, and the flow channel portion is disposed in a matching manner, so that the flow channel of the heat exchange medium of the heat exchanger 10 is winding, to form two U-shaped flow channels connected in series, or the flow path of the heat exchange medium is snake-shaped. In this implementation solution, the stroke of the heat exchange medium of the heat exchanger 10 is four times that of a heat exchanger with a single flow channel. After winding, balance of temperatures at two ends of the heat exchanger 10 is good, and heat exchange is sufficient, to effectively improve heat exchange efficiency.

Each of the four flow channel portions of the main body portion 130 includes the flat tube 132, and as far as the main body portion 130 is concerned, the main body portion 130 includes at least four flat tubes 132. In the solution shown in the figure, each of the four flow channel portions includes three flat tubes 132. In this way, the main body portion 130 has twelve flat tubes 132 in total. In another implementation solution, quantities of flat tubes 132 of flow channel portions may be set to be the same, or may be set to be different, or may be set to be partially the same. The quantity of flat tubes 132 of each flow channel portion may be three as shown in the figure, or may be one, two, or four, or another number, which is not limited herein.

In a plurality of flat tubes 132 of the main body portion 130, at least some of the flat tubes 132 may be arranged in a first direction, and a fin 133 is disposed between two adjacent flat tubes 132 in the first direction. In this way, when flowing in the channel 1321 of the flat tube 132, the heat exchange medium may perform heat exchange with airflow outside the heat exchanger 10 through the fin 133, to increase a heat exchange area, and further improve heat exchange efficiency of the heat exchanger 10.

Because the flat tube 132 extends in the x-axis direction, the first direction is a direction perpendicular to the x-axis direction, and may be the y-axis direction or the z-axis direction.

Further, in the first direction, the main body portion 130 is further provided with two plate bodies 134, the plate body 134 extends in the x-axis direction, and two ends of the plate body 134 in the x-axis direction are respectively fastened to the first housing 110 and the second housing 120. In the first direction, the fin 133 is also disposed between the plate body 134 and the flat tube 132 adjacent to the plate body 134. In this way, in the first direction, the fin 133 is disposed on two sides of each flat tube 132. This can further increase a heat exchange area.

In this implementation solution, the three flat tubes 132 of the first flow channel portion 131a and the three flat tubes 132 of the second flow channel portion 131b of the main body portion 130 are arranged in the z-axis direction to form a first flat tube group; and the three flat tubes 132 of the third flow channel portion 131c and the three flat tubes 132 of the fourth flow channel portion 131d of the main body portion 130 are arranged in the z-axis direction to form a second flat tube group. The first flat tube group and the second flat tube group are arranged in the y-axis direction. In other words, the main body portion 130 has the two flat tube groups, the flat tubes of each flat tube group are arranged in the z-axis direction, and the two flat tube groups are arranged in the y-axis direction. With reference to FIG. 4, FIG. 7, and FIG. 8, it is understood that the quantities of flat tubes 132 of the flow channel portions are set to be the same, quantities of flat tubes 132 in the two flat tube groups are also the same, and positions of the flat tubes 132 in the two flat tube groups in the z-axis direction may be in a one-to-one correspondence. In this way, the fins 133 in the two flat tube groups at a same height may be disposed as an integrated structure. In addition, the plate body below the first flat tube group and the plate body below the second flat tube group may be of an integrated structure, and the plate body above the first flat tube group and the plate body above the second flat tube group may also be of an integrated structure. In this way, a quantity of parts of the main body portion 130 can be reduced, to facilitate assembling of the main body portion 130. Definitely, the fins 133 in the two flat tube groups at the same height may alternatively be disposed separately, and an independent plate body may alternatively be disposed for each flat tube group.

In another implementation solution, the plurality of flat tubes 132 of the main body portion 130 may be partially arranged in the first direction, and partially arranged in a second direction, where the first direction is perpendicular to the second direction. On a basis that the channel 1321 of the flat tube 132 extends in the x-axis direction, one of the z-axis direction and the y-axis direction is the first direction, and the other is the second direction. For example, the flat tubes 132 of the first flow channel portion 131a and the flat tubes 132 of the fourth flow channel portion 131d may be arranged in the y-axis direction, and the flat tubes 132 of the second flow channel portion 131b and the flat tubes 132 of the third flow channel portion 131c may still be arranged in the z-axis direction separately, which is consistent with the solution shown in the figure. For another example, the flat tubes 132 of the second flow channel portion 131b and the flat tubes 132 of the third flow channel portion 131c may be arranged in the y-axis direction, and the flat tubes 132 of the first flow channel portion 131a and the flat tubes 132 of the fourth flow channel portion 131d may still be arranged in the z-axis direction separately, which is consistent with the solution shown in the figure. The four flow channel portions of the main body portion 130 may alternatively have respective arrangement manners.

In another implementation solution, when the quantities of flat tubes 132 of the flow channel portions of the main body portion 130 are different, the fin 133 and the plate body 134 may be disposed based on an arrangement situation in a matching manner.

In this implementation solution, the main body portion 130 is provided with the four flow channel portions. In another implementation solution, the main body portion 130 may alternatively be provided with only two flow channel portions, or may be provided with three flow channel portions, or may be provided with five or more flow channel portions. A quantity of chambers of the first housing 110 and a quantity of cavities of the second housing 120 are set based on the quantity of flow channel portions in a matching manner. A setting principle is that all flow channel portions are connected in series, so that a flow stroke of the heat exchange medium in the heat exchanger 10 is increased. Based on different quantities of flow channel portions, the inlet and the outlet 150 of the heat exchanger 10 may be provided in a same end of the heat exchanger 10, for example, both are provided in the first housing 110 in this implementation solution, or may be separately provided in two ends of the heat exchanger 10, for example, when there are three flow channel portions.

In another implementation solution, a position arrangement of the chambers of the first housing 110 and a position arrangement of the cavities of the second housing 120 may alternatively be changed based on a requirement.

During application, the heat exchange medium of the heat exchanger 10 may be a liquid working medium, or may be a gas-liquid two-phase working medium, or the like. Selection may be made based on a heat exchange requirement or the like.

The heat exchanger 10 is an air-cooling heat exchanger. During application, the heat exchange medium flowing in the heat exchanger 10 performs heat exchange with airflow flowing through the heat exchanger 10.

An embodiment of this application further provides a heat dissipation module. FIG. 10 is a diagram of a structure of a heat dissipation module according to an embodiment of this application. A solid arrow in FIG. 10 indicates a flow direction of a heat exchange medium in the heat dissipation module.

The heat dissipation module includes a first heat exchange portion 1, a second heat exchange portion 2, and a power component 3. An inlet of the first heat exchange portion 1 is connected to an outlet of the second heat exchange portion 2, an outlet of the first heat exchange portion 1 is connected to an inlet of the second heat exchange portion 2, and the power component 3 is disposed on a pipeline between the outlet of the first heat exchange portion 1 and the inlet of the second heat exchange portion 2. The power component 3 is configured to provide power for the heat exchange medium to circulate in a loop of the heat dissipation module. The first heat exchange portion 1 is the heat exchanger 10 described above.

The heat dissipation module is configured to dissipate heat for a heat generation component. During specific application, the second heat exchange portion 2 may be configured to perform heat exchange with the heat generation component. A heat exchange medium of a lower temperature may flow into the second heat exchange portion 2 under driving of the power component 3, perform heat exchange with the heat generation component in the second heat exchange portion 2, and become a heat exchange medium of a higher temperature after absorbing heat of the heat generation component. The heat exchange medium of a higher temperature flows out from the second heat exchange portion 2 and flows into the heat exchanger 10. The heat exchange medium flows in the heat exchanger 10 and performs heat exchange with heat dissipation air outside the heat exchanger 10. After heat dissipation is performed on the heat exchange medium in the heat exchanger 10, the heat exchange medium changes to a state of the lower temperature again, and flows into the second heat exchange portion 2 again under driving of the power component 3. This is cyclically performed, so that heat dissipation can be continuously performed on the heat generation component.

The first heat exchange portion 1 of the heat dissipation module is the foregoing heat exchanger 10. After the heat exchanger 10 is used, a stroke of the heat exchange medium in the heat exchanger 10 is increased, a heat exchange capability is improved, and good heat exchange efficiency can be achieved, so that good heat dissipation effect is achieved for the heat generation component.

In a specific implementation, two power components 3 are connected in series in a circulation loop of the heat dissipation module, and two second heat exchange portions 2 are also connected in series. The two second heat exchange portions 2 may dissipate heat for heat generation components in different regions in an application scenario. In another specific implementation, a quantity of power components 3 and a quantity of second heat exchange portions 2 are not limited, and may be set based on a requirement.

The power component 3 may be a pump or the like. The second heat exchange portion 2 may be a heat exchange structure such as a cooling plate.

During specific application, the heat dissipation module may be used together with a device such as a fan, and the fan is used to form the heat dissipation air that performs heat exchange with the first heat exchange portion 1 (namely, the heat exchanger 10).

The heat dissipation module may further include a container 4, and the container 4 is connected to a pipeline between the outlet of the first heat exchange portion 1 and the inlet of the power component 3. When the heat exchange medium is a liquid cooling working medium, the container 4 may be a liquid storage tank. When the heat exchange medium is a gas-liquid two-phase working medium, the container 4 may be a gas-liquid separator.

The heat dissipation module may be used in a device such as a server, a storage device, or a cloud core device in an equipment room. The heat dissipation module may also be used in another scenario that has a heat dissipation requirement.

An embodiment of this application further provides a compute device. The compute device includes a heat generation component and a heat dissipation module. The heat dissipation module is the heat dissipation module shown in FIG. 10. The second heat exchange portion 2 of the heat dissipation module is configured to perform heat exchange with the heat generation component of the compute device.

For example, the compute device may be a compute node, or may be a device such as a server.

The heat generation component of the compute device may be a component such as a chip, a CPU, or a graphics processing unit (Graphic Processing Unit, GPU) of a graphics card. It may be understood that the heat generation component that uses the heat dissipation module to perform heat dissipation processing is not limited to a chip, a CPU, or a GPU of a graphics card, and may alternatively be another high-power component of the compute device.

The compute device that uses the foregoing heat dissipation module can have good heat dissipation effect for the heat generation component of the compute device, and can ensure running reliability of the compute device.

The foregoing are merely preferred implementations of the present invention. It should be noted that a person of ordinary skill in the art may make several improvements and modifications without departing from the principle of the present invention, and the improvements and modifications shall be regarded as falling within the protection scope of the present invention.

## Claims

1. A heat exchanger, comprising a first housing, a second housing, and a main body portion, wherein
the first housing and the second housing are fastened to two end portions of the main body portion;
the first housing has at least two independent chambers, the second housing has at least one independent cavity, and the main body portion comprises at least two flow channel portions; and
an inlet of the heat exchanger communicates with one chamber, an outlet of the heat exchanger communicates with another chamber or the cavity, and the flow channel portion communicates with one of the at least two chambers and one of the at least one cavity, so that a heat exchange medium flowing in through the inlet is able to sequentially flow through the flow channel portions and then flow out from the outlet.

2. The heat exchanger according to claim 1, wherein the first housing and the second housing each comprise a wall plate, a housing main body, and a cover plate, the housing main body is fastened between the wall plate and the cover plate, and the wall plate, the housing main body, and the cover plate enclose a housing cavity;
the first housing further comprises a first partition plate, and the first partition plate divides a housing cavity of the first housing into at least two chambers; and
the second housing further comprises a second partition plate, and the second partition plate divides a housing cavity of the second housing into at least two cavities.

3. The heat exchanger according to claim 2, wherein a first reinforcing structure is disposed inside the housing cavity of the first housing; and/or a second reinforcing structure is disposed inside the housing cavity of the second housing.

4. The heat exchanger according to claim 3, wherein the first reinforcing structure comprises a first support column connected between the wall plate and the cover plate of the first housing; and/or the second reinforcing structure comprises a second support column connected between the wall plate and the cover plate of the second housing.

5. The heat exchanger according to any one of claims 2 to 4, wherein the flow channel portion comprises a flat tube, the flat tube has a plurality of channels, and two ends of the flat tube are respectively fixedly inserted into the wall plate of the first housing and the wall plate of the second housing, so that the channel communicates with the chamber and the cavity.

6. The heat exchanger according to claim 5, wherein the main body portion comprises a plurality of flat tubes and a plurality of fins, in the plurality of flat tubes of the main body portion, at least some of the flat tubes are arranged in a first direction, and the fin is disposed between two adjacent flat tubes in the first direction.

7. The heat exchanger according to claim 6, wherein the main body portion further comprises at least two plate bodies, a plurality of flat tubes arranged in the first direction are located between the two plate bodies, the fin is disposed between the plate body and a flat tube adjacent to the plate body, and two ends of the plate body are respectively fastened to the first housing and the second housing.

8. The heat exchanger according to claim 6, wherein in the plurality of flat tubes of the main body portion, at least some of the flat tubes are arranged in a second direction, the second direction is perpendicular to the first direction, and the fin is also disposed between two adjacent flat tubes in the second direction.

9. A heat dissipation module, comprising a power component, a first heat exchange portion, and a second heat exchange portion, wherein the first heat exchange portion is the heat exchanger according to any one of claims 1 to 8, an inlet of the first heat exchange portion is connected to an outlet of the second heat exchange portion, an outlet of the first heat exchange portion is connected to an inlet of the second heat exchange portion, and the power component is disposed on a pipeline between the outlet of the first heat exchange portion and the inlet of the second heat exchange portion.

10. A compute device, comprising a heat generation component and a heat dissipation module, wherein the heat dissipation module is the heat dissipation module according to claim 9, and the second heat exchange portion is configured to perform heat exchange with the heat generation component.
